# EUROPEAN PATENT SPECIFICATION

(11) **EP 1 761 124 B1**
(45) Date of publication and mention of the grant of the patent: **22.02.2012**
(21) Application number: 05754837.2
(22) Date of filing: 29.06.2005
(51) Int. Cl.: A01D 34/416, B25G 3/00, B25F 5/00

(54) **ARRANGEMENT FOR SECURING A HANDLE BAR TO A PORTABLE TOOL**
ANORDNUNG ZUM BEFESTIGEN EINER GRIFFSTANGE AN EINEM TRAGBAREN WERKZEUG
ENSEMBLE POUR FIXER UNE POIGNÉE À TIGE SUR UN OUTIL PORTATIF

(30) Priority: 01.07.2004 SE 0401706
(43) Date of publication of application: 14.03.2007
(73) Proprietor: Husqvarna AB, 561 82 Huskvarna (SE)
(72) Inventor: EJDEHAG, Fredrik, 553 13 Jönköping (SE)
(86) International application number: PCT/SE2005/001045
(87) International publication number: WO 2006/004515

(56) References cited:
- EP-A1- 0 294 842
- EP-B1- 1 226 746
- US-A- 3 581 832
- US-A- 4 236 310
- US-A- 5 855 069
- US-A1- 2002 004 989

## Description

### TECHNICAL FIELD

The claimed invention relates to a portable power tool with a handle bar secured to a tube of the tool by a holding device placed between the handle bar and the tube.

### BACKGROUND

Clearing saws, trimmers, brush cutters and hedge trimmers are frequently used in order to facilitate work in forests and gardens. These power_tools are available in several different sizes and shapes, each of them optimized for the work that the tool is supposed to be used for and to meet the requirements from the operator. Clearing saws, trimmers, brush cutters and hedge trimmers comprises an engine and there to related components placed in one end of a tube. The drive shaft extends inside the tube from the engine to the other end of the tube where it is connected to the working tool. The length of the tube and the working tool, for example a trimmer head for a cutting filament, a saw blade, a guide bar and saw chain or a device for a hedge trimmer, are selected for the specific use of the product.

In order to improve the working conditions for the operator these tools are carried by a harness placed around the shoulders of the operator. The tool is attached to a strap extending from the harness so that the strap and the harness support the weight of the tool. The tools are also provided with a handle bar secured to the tool somewhere along the tube by a holding device. One end of the holding device is clamped to the tube and at the other end the handle bar is secured. The handle bar is used by the operator for maneuvering the working tool during use of the power tool.

The power tool comprises several components that are moving when the tool is running. These components generate vibrations in the tube that are transferred to the handle bar. These vibrations are consequently also transferred to the hands of the operator via the handle bar, which is very uncomfortable for the operator.

A handle bar arrangement that improves the working conditions for the operator is therefore requested.

### SUMMARY

In view of the above, it is an objective to solve or at least reduce the problems discussed above.

The objective is achieved with a portable power tool according to claim 1, in which the portable power tool includes an elongate tube, a power source placed in a first end of the tube, a working tool placed in a second end of the tube and a handle bar secured to the tube by a holding device placed between the handle bar and the tube. A sleeve is fixed around the tube, the inside of said sleeve is shaped to match the cross section of the tube and the outside of said sleeve has a non-circular shape. The sleeve further is at least partially surrounded by a layer of an elastic material, and the holding device is provided with a cavity with a similar shape as the outside of the sleeve and is arranged to be clamped around the sleeve and layer of elastic material.

Thus, the amount of vibration transferred from the tool to the handle bar is reduced.

The layer of elastic material reduces the vibration transferred from the tool to the handle bar and the non- circular shaped outside of the sleeve and cavity keeps the holding device in the intended position even though there is an elastic material between the sleeve and the holding device.

One preferred embodiment of the invention comprises an elastic layer that surrounds the entire sleeve. The thickness of the layer is between 2 to 15 mm. An elastic layer with bigger thickness is more efficient in reducing the amount of vibrations transferred to the handle. A thick elastic layer however makes it more complicated to clamp the holding device around the sleeve and the elastic layer in a reliably manner. The non-circular shape of the outside of the sleeve, and consequently also the elastic layer, makes it possible to fasten the holding device since the non-circular shape of the sleeve, the elastic layer and the section of the holding device that surrounds the sleeve and elastic layer will prevent movements between the sleeve and the holding device. The claimed invention therefore reduces the amount of vibrations transferred to the handle bar and offers reliable fastening of the handle bar to the tube.

The tube is normally circular but other shapes may be used. A non-circular shape of the tube and the inside of the sleeve is a more complicated solution but it is an efficient solution that avoids movements between the tube and the sleeve.

The outside of the sleeve and the corresponding section of the holding device are preferably oval shaped. The oval shaped sleeve and cavity in the holding device is easy to manufacture. The oval shape also makes it possible to mount the arrangement on the tube in an easy and efficient way.

### BRIEF DESCRIPTION OF THE DRAWINGS

One embodiment of the claimed invention is illustrated in the drawings.
- Figure 1.: Illustrates a clearing saw provided with the claimed invention for securing the handle bar to the tube.
- Figure 2.: Illustrates a side view of the claimed invention.
- Figure 3.: Illustrates a cross section through line A-A in figure 2.
- Figure 4.: Illustrates a perspective view of the claimed invention.

### DETAILED DESCRIPITION

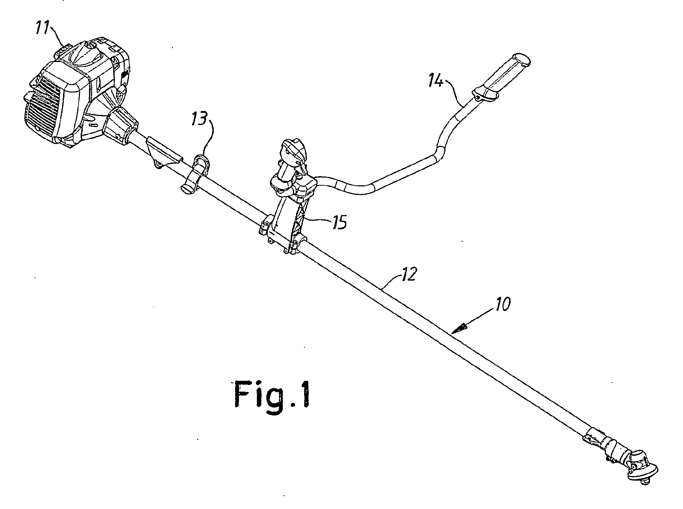

In figure 1 an embodiment of the invention is illustrated as a clearing saw. The power tool comprises a power source 11, normally a combustion engine, and related components, like for example fuel tank, muffler and a starting device placed in one end of a tube 12. The tube extends in longitudinal direction of the tool. The length of the tube depends on which type of work the tool is designed for. In the opposite end as the engine a not illustrated working tool is placed. The working tool is selected for the specific work that the tool will be used for. Examples of working tools are hedge trimmer blades, a guide bar with a saw chain, a cutting blade, or a filament cutter. A handle bar 14 is attached to the tube 12 somewhere along the tube 12 in order to make it possible for the operator to maneuver the tool 10. The handle bar 14 is secured to the tube 12 by a holding device 15.

Tools provided with a handle bar 14 are supported by a harness or strap extending around the shoulders of the operator. The harness or strap is attached to a loop 13 secured to the tool.

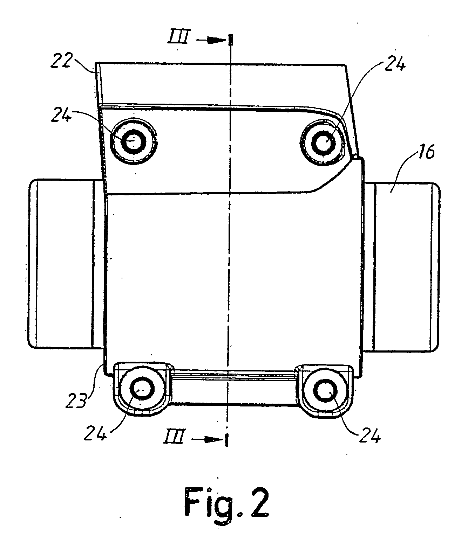

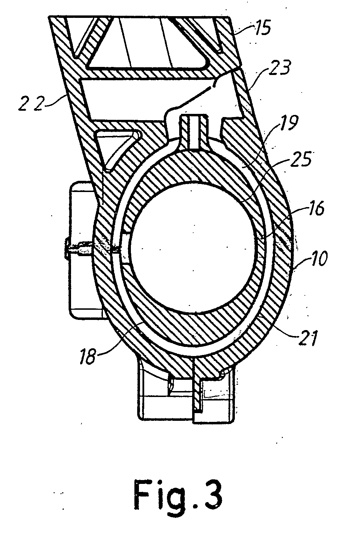

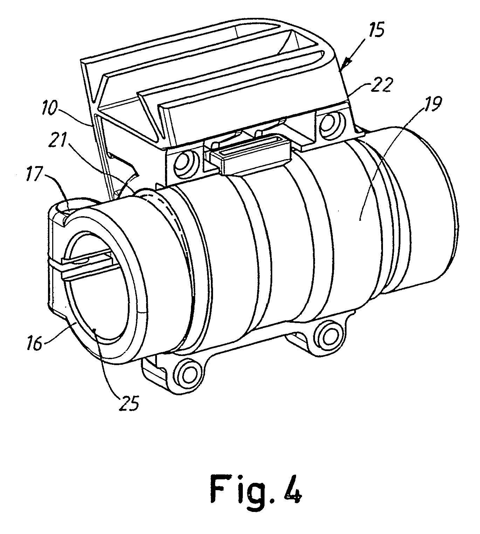

The details of the claimed invention are illustrated in figure 2, 3 and 4. A sleeve 16 is fixed around the tube 12. The tube 12 has a circular cross section and the inside 25 of the sleeve 16 has a similar shape as the tube 12. The sleeve 16 is clamped to the tube 12 by a two screws 17 placed in the ends of the sleeve 16. The outside 18 of the sleeve 16 has a non-circular shape. In the illustrated embodiment the outside 18 of the sleeve 16 is oval but all other non-circular shapes could be used. A layer 19 covering substantially the entire circumference of the oval section of the sleeve 16 surrounds the sleeve 16. The layer 19 has a substantially constant thickness in radial direction around the sleeve 16 and is made of an elastic material. The elastic material will reduce the amount of vibrations transferred from the tool 10 to the handle bar 14. The thickness of the elastic layer is between 2 and 15 millimeters but to ensure a satisfying reduction of vibrations in the handle bar 14 the elastic layer 19 should be at least 3 millimeters and made of rubber or a material with similar features.

The elastic layer 19 is surrounded by a cavity 21 formed in a first end 20 of the holding device 15. The cavity 21 has the same non-circular shape as the outside 18 of the sleeve 16. The non-circular shape of the outside 18 of the sleeve 16 and the cavity 21 in the holding device 15 keeps the holding device 15 in the predetermined position in relation to the sleeve 16 even though the sleeve 16 is surrounded by the elastic layer 19. This feature is essential for the claimed invention.

The thickness of the elastic layer 19 as well as the shape of the outside 18 of the sleeve 16 and of the cavity may vary in axial direction along the tube 12 to avoid movements in axial direction between the sleeve 16, the elastic layer 19 and the holding device 15. A changed thickness of the elastic layer 19 or a change of the shape of the outside 18 of the sleeve 16 and of the cavity must however be accomplished by a similar change in the close contact layer or surface.

The first end 20 of the holding device 15 comprises a first section 22 with one part of the cavity 21 and a second section 23 with the remaining part of the cavity 21. The two sections 22 and 23 are necessary to make it possible to mount and secure the holding device 15 around the sleeve 16 and the elastic layer 19. The second section 23 is fastened to the first section 22 integrated in the holding device 15 by four screws 24. The cavity could also be divided into more than two sections 22 and 23 if that for some reason is favorable. The number of screws could also vary.

At the second end of the holding device 15, illustrated in figure 1, the handle bar is secured to the holding device.

## Claims

1. A portable power tool comprising:
- an elongate tube (12),
- a power source (11) placed at a first end of the tube (12),
- a working tool placed at a second end of the tube (12), and
- a handle bar (14) secured to the tube (12) by a holding device (15) placed between the handle bar (14) and the tube (12)
**characterized in that** a sleeve (16) is fixed around the tube (12), the inside (25) of said sleeve (16) is shaped to match the cross section of the tube (12) and the outside (18) of said sleeve has a non-circular shape, said sleeve (16) is at least partially surrounded by a layer (19) of an elastic material, and said holding device (15) is provided with a cavity (21) with a similar shape as the outside (18) of the sleeve (16) and is arranged to be clamped around the sleeve (16) and layer (19) of elastic material.

2. A portable power tool according to claim 1, **characterized in that** the tube (12) and the inside (25) of the sleeve (16) have a circular cross section.

3. A portable power tool according to claim 1 or 2, **characterized in that** the outside (18) of the sleeve (16) and the cavity (21) have an oval shape.

4. A portable power tool according to claim 1, 2 or 3, **characterized in that** the layer (19) of elastic material is extending around substantially the entire sleeve (16).

5. A portable power tool according to any of the previous claims, **characterized in that** the layer (19) of elastic material is made of rubber or a material with similar features.

6. A portable power tool according to any of the previous claims, **characterized in that** the thickness of the layer (19) of elastic material is 2 to 15 millimeter.

7. A portable power tool according to claim 6, **characterized in that** the thickness of layer (19) of elastic material is 3 to 7 millimeters.

8. A portable power tool according to any of the previous claims, **characterized in that** the end (20) of the holding device (15) where the cavity (21) is located comprises at least two sections (22, 23) dividing the cavity (21) into at least two parts to make it possible to clamp the holding device (15) around the sleeve (16).

## Patentansprüche

1. Tragbares Elektrowerkzeug, umfassend:
- ein längliches Rohr (12),
- eine Stromquelle (11), die an einem ersten Ende des Rohrs (12) platziert ist,
- ein Arbeitswerkzeug, das an einem zweiten Ende des Rohrs (12) platziert ist, und
- eine Griffstange (14), die an dem Rohr (12) mit einer Haltevorrichtung (15), die zwischen der Griffstange (14) und dem Rohr (12) platziert ist, befestigt ist,
**dadurch gekennzeichnet, dass** eine Hülse (16) um das Rohr (12) herum befestigt ist, die Innenseite (25) der Hülse (16) so geformt ist, dass sie dem Querschnitt des Rohrs (12) entspricht und die Außenseite (18) der Hülse eine nicht kreisförmige Form aufweist, die Hülse (16) zumindest teilweise von einer Schicht (19) aus einem elastischen Material umgeben ist, und die Haltevorrichtung (15) mit einem Hohlraum (21) mit einer ähnlichen Form wie die Außenseite (18) der Hülse (16) versehen ist und so angeordnet ist, dass sie um die Hülse (16) und die Schicht (19) aus elastischem Material herum geklemmt werden kann.

2. Tragbares Elektrowerkzeug nach Anspruch 1, **dadurch gekennzeichnet, dass** das Rohr (12) und die Innenseite (25) der Hülse (16) einen kreisförmigen Querschnitt aufweisen.

3. Tragbares Elektrowerkzeug nach Anspruch 1 oder 2, **dadurch gekennzeichnet, dass** die Außenseite (18) der Hülse (16) und der Hohlraum (21) eine ovale Form aufweisen.

4. Tragbares Elektrowerkzeug nach Anspruch 1, 2 oder 3, **dadurch gekennzeichnet, dass** die Schicht (19) aus elastischem Material um im Wesentlichen die gesamte Hülse (16) verläuft.

5. Tragbares Elektrowerkzeug nach einem der vorhergehenden Ansprüche, **dadurch gekennzeichnet, dass** die Schicht (19) aus elastischem Material aus Gummi oder einem Material mit ähnlichen Eigenschaften hergestellt ist.

6. Tragbares Elektrowerkzeug nach einem der vorhergehenden Ansprüche, **dadurch gekennzeichnet, dass** die Dicke der Schicht (19) aus elastischem Material 2 bis 15 Millimeter beträgt.

7. Tragbares Elektrowerkzeug nach Anspruch 6, **dadurch gekennzeichnet, dass** die Dicke der Schicht (19) aus elastischem Material 3 bis 7 Millimeter beträgt.

8. Tragbares Elektrowerkzeug nach einem der vorhergehenden Ansprüche, **dadurch gekennzeichnet, dass** das Ende (20) der Haltevorrichtung (15), wo sich der Hohlraum (21) befindet, mindestens zwei Abschnitte (22, 23) umfasst, die den Hohlraum (21) in mindestens zwei Teile unterteilen, um es zu ermöglichen, die Haltevorrichtung (15) um die Hülse (16) herum zu klemmen.

## Revendications

1. Outil électrique portatif comprenant :
- un tube allongé (12),
- une source de courant (11) placée à une première extrémité du tube (12),
- un outil de travail placé à une seconde extrémité du tube (12), et
- une poignée à tige (14) fixée sur le tube (12) par un dispositif de maintien (15) placé entre la poignée à tige (14) et le tube (12)
**caractérisé en ce qu'**un manchon (16) est fixé autour du tube (12), l'intérieur (25) dudit manchon (16) est formé pour correspondre à la section transversale du tube (12) et l'extérieur (18) dudit manchon présente une forme non circulaire, ledit manchon (16) est au moins partiellement entouré par une couche (19) d'un matériau élastique, et ledit dispositif de maintien (15) est pourvu d'une cavité (21) avec une forme similaire à l'extérieur (18) du manchon (16) et est agencé pour être serré autour du manchon (16) et de la couche (19) de matériau élastique.

2. Outil électrique portatif selon la revendication 1, **caractérisé en ce que** le tube (12) et l'intérieur (25) du manchon (16) présentent une section transversale circulaire.

3. Outil électrique portatif selon la revendication 1 ou 2, **caractérisé en ce que** l'extérieur (18) du manchon (16) et la cavité (21) présentent une forme ovale.

4. Outil électrique portatif selon la revendication 1, 2 ou 3, **caractérisé en ce que** la couche (19) de matériau élastique s'étend essentiellement autour de la totalité du manchon (16).

5. Outil électrique portatif selon l'une quelconque des revendications précédentes, **caractérisé en ce que** la couche (19) de matériau élastique est fabriquée en caoutchouc ou en un matériau ayant des propriétés similaires.

6. Outil électrique portatif selon l'une quelconque des revendications précédentes, **caractérisé en ce que** l'épaisseur de la couche (19) de matériau élastique est de 2 à 15 millimètres.

7. Outil électrique portatif selon la revendication 6, **caractérisé en ce que** l'épaisseur de la couche (19) de matériau élastique est de 3 à 7 millimètres.

8. Outil électrique portatif selon l'une quelconque des revendications précédentes, **caractérisé en ce que** l'extrémité (20) du dispositif de maintien (15) à laquelle la cavité (21) se situe comprend au moins deux sections (22, 23) divisant la cavité (21) en au moins deux parties pour rendre possible le serrage du dispositif de maintien (15) autour du manchon (16).
